# EUROPÄISCHE PATENTANMELDUNG

(11) **EP 2 226 445 A2**
(43) Veröffentlichungstag der Anmeldung: **08.09.2010**
(21) Anmeldenummer: 10155531.6
(22) Anmeldetag: 04.03.2010
(51) Int. Cl.: E04B 2/16

(54) **Mauerstein aus Porenbeton**

(30) Priorität: 05.03.2009 DE 102009011992
(71) Anmelder: Greisel Bauelemente GmbH, 91555 Feuchtwangen (DE)
(72) Erfinder: Liebert, Manfred, 86485 Biberbach (DE)
(74) Vertreter: Hübner, Gerd

(57) **Zusammenfassung**

Mauerstein aus Porenbeton umfassend mehrere quer zu einer Wärmedurchgangsrichtung (9) verlaufende Reihen vertikaler Dämmöffnungen (10) und jeweils in die Dämmöffnungen (10) eingesetzte Dämmeinsätze (11) aus einem Wärmedämmmaterial, wobei die Dämmöffnungen (10) benachbarter Reihen versetzt zueinander angeordnet sind und wobei die Dämmöffnungen (10) und die jeweils darin befindlichen Dämmeinsätze (11) zylindrisch geformt sind.

## Beschreibung

Die Erfindung betrifft einen Mauerstein aus Porenbeton.

Derartige Mauersteine sind grundsätzlich seit langem bekannt. Sie zeichnen sich durch einen materialeinheitlichen Aufbau aus einem tragendem Betonmaterial aus, das mit in der Regel feinen Poren innig durchsetzt ist. Durch diese Lufteinschlüsse weist ein solcher Porenbetonstein bereits an sich ein gutes Wärmedämmvermögen auf.

An Mauerbaustoffe, insbesondere für den Wohnungsbau, werden nun zunehmend anspruchsvollere Anforderungen gestellt. So soll die klassische massive Bauweise mit einer hohen Belastbarkeit des Mauerwerks und einem ausgezeichneten Brand- und Lärmschutzverhalten bei möglichst geringen Wanddicken realisierbar sein. Dabei soll eine möglichst hohe Wärmedämmung erreicht werden. Optimalerweise soll der Wärmedurchgang durch die Wand so niedrig gehalten werden, dass hohe Standards, wie sie beispielsweise für den Bau eines sogenannten Passivhauses gefordert werden, eingehalten sind.

Durch offenkundige Vorbenutzung sind Mauersteine aus Porenbeton mit zusätzlichen Dämmeinsätzen zur Erhöhung der Dämmwirkung bekannt. Derartige Mauersteine weisen eine reduzierte Belastbarkeit des Mauerwerks auf.

Davon ausgehend liegt der Erfindung die Ausgabe zugrunde, einen Mauerstein aus Porenbeton derart zu gestalten, dass eine hohe Belastbarkeit des Mauerwerks bei gleichzeitig möglichst hoher Wärmedämmung gewährleistet ist.

Diese Aufgabe wird durch einen Porenbeton-Mauerstein mit den im Anspruch 1 angegebenen Merkmalen gelöst.

Demnach wird eine verbesserte Wärmedämmung gegenüber einem herkömmlichen Mauerstein aus Porenbeton dadurch erreicht, dass in dem Mauerstein mehrere quer zu einer Wärmedurchgangsrichtung verlaufende Reihen vertikaler Dämmöffnungen vorgesehen sind, in die Dämmeinsätze aus Wärmedämmmaterial eingesetzt werden. Dadurch, dass sowohl die Dämmöffnungen als auch die Dämmeinsätze zylindrisch und in benachbarten Reihen versetzt zueinander angeordnet sind, entsteht eine wabenförmige Struktur in dem Mauerstein. Diese Struktur zeichnet sich durch eine Vielzahl von regelmäßig angeordneten Knoten aus, mittels derer der Porenbeton-Mauerstein einer hohen Mauerdruckspannung standhält, da Spannungsspitzen einer mechanischen Belastung des Mauersteins in Folge von Kerbwirkung hervorgerufen durch eine sprunghafte Querschnittsänderung oder scharfe Ecken und Kanten vermieden werden. Die Verwendung von Dämmeinsätzen in einem Mauerstein ist zwar bereits aus der Ziegelindustrie bekannt, jedoch werden dort quaderförmige Einsätze verwendet, die aufgrund ihrer Anordnung im Mauerstein im Belastungsfall eine ungünstige Beanspruchung des Mauerwerks hervorrufen und damit insgesamt die Belastbarkeit des Mauerwerks reduzieren.

In den abhängigen Ansprüchen sind bevorzugte Ausführungsformen des Mauersteins angegeben. Deren Merkmale, Einzelheiten und Vorteile werden aus der nachfolgenden Beschreibung anhand der beigefügten Zeichnung klar. Es zeigen:

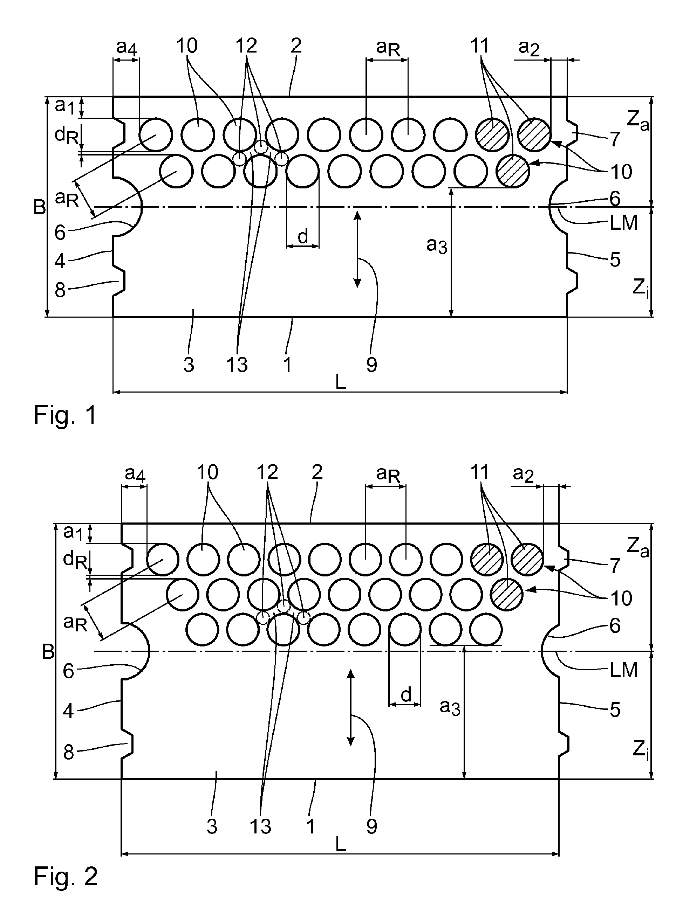

- Fig. 1 bis 6: Draufsichten auf Mauersteine in unterschiedlichen Ausführungsformen.

Der in den Figuren dargestellte Mauerstein besteht aus üblichem Porenbeton und ist in seinem Grundaufbau quaderförmig mit einer Innenseite 1, einer Außenseite 2, einer nicht erkennbaren Grundfläche, einer Deckfläche 3 und den beiden seitlichen Fugenflächen 4, 5. Letztere sind mittig mit einer vertikal durchgehenden, im Horizontalschnitt halbkreisförmigen Mörtelnut 6, sowie einem nut- und federartigen Passsystem mit im Horizontalschnitt trapezförmigen, vertikal durchgehenden Stegvorsprüngen 7 und korrespondierenden Ausnehmungen 8 versehen.

Quer zu einer Wärmedurchgangsrichtung 9 sind mehrere Reihen vertikaler Durchgangsbohrungen 10 angeordnet, in die jeweils ein Dämmeinsatz 11 aus Mineralfaser eingesetzt ist. Aus Darstellungsgründen sind in den Figuren auch Dämmöffnungen 10 ohne Dämmeinsatz 11 gezeigt, wobei bei dem erfindungsgemäßen Mauerstein alle Dämmöffnungen 10 einen korrespondierenden Dämmeinsatz 11 aufweisen. Die Dämmöffnungen sind zylindrisch und haben einen Durchmesser d in einem Bereich von 40 mm bis 50 mm, wobei auch Durchmesser von 30 mm bis 60 mm denkbar sind.

Aus den Figuren ist weiterhin zu erkennen, dass die Dämmöffnungen 10 benachbarter Reihen derart versetzt zueinander angeordnet sind, dass ein gleichmäßiger Rastermittenabstand a_{R} zwischen zwei benachbarten Dämmöffnungen 10 in einer Reihe und im Wesentlichen auch zwischen zwei benachbarten Reihen vorliegt. Die Dämmöffnungen 10 sind in dem gleichmäßigen Rastermittenabstand a_{R} von 50 mm bis 85 mm angeordnet. Weiterhin beträgt ein Reihenabstand d_{R} der Dämmöffnungen 10 zwischen zwei benachbarten Reihen 3 mm bis 15 mm. Es ist auch denkbar, den Reihenabstand d_{R} derart festzulegen, dass der Rastermittenabstand a_{R} für alle benachbarten Dämmöffnungen 10 identisch ist. Dadurch ergibt sich eine gleichmäßige Anordnung der Dämmöffnungen 10, die durch Verbindungsstege 13 miteinander verbundene Knoten 12 einschließen. Durch diese wabenförmige Struktur der Dämmöffnungen 10 mit den dazwischen angeordneten Knoten 12 wird ein Mauerstein mit einer hohen Belastbarkeit geschaffen.

Der Dämmeinsatz 11 ist stabförmig und korrespondierend zu der als Durchgangsbohrung gestalteten Dämmöffnung 10 ausgebildet, sodass die Dämmöffnung 10 durch den eingesetzten Dämmeinsatz 11 vollständig ausgefüllt ist. Der Dämmeinsatz 11 ist aus Wärmedämmmaterial, insbesondere Mineralfasermaterial in Form von Mineralfaserplatten, insbesondere Steinwolleplatten mit einer Wärmeleitfähigkeit λ = 0,035 W/mK, hergestellt. Es können aber auch andere Wärmedämmmaterialien verwendet werden.

Der Mauerstein weist bei beiden Ausführungsformen eine Länge L von 624 mm auf, eine Breite B variiert bei den Ausführungsformen. Die wabenförmige Struktur der Dämmöffnungen 10 ist zu den Fugenflächen 4, 5, der Innenseite 1 und der Außenseite 2 in Abständen a₁ bis a₄ angeordnet. Zwischen den Dämmöffnungen 10 und der Außenseite 2 ist eine äußere Bewitterungszone mit einer Breite, die dem Abstand a₁ entspricht, vorgesehen, um den Mauerstein auf der Außenseite ausreichend, insbesondere gegen Witterungseinflüsse, zu schützen. Die Abstände a₂ und a₄ zu den Fugenflächen 4, 5 sind im Wesentlichen gleich groß, sodass die Dämmöffnungen 10 in einer Richtung senkrecht zur Wärmedurchgangsrichtung 9 in etwa zentriert angeordnet sind.

Die Deckfläche 3 hat einen Flächeninhalt F, die Summe der Einzel-Querschnittsflächen der Dämmöffnungen 11 ergibt eine Summen-Dämmfläche D.

Der in Figur 1 gezeigte Mauerstein weist neunzehn Dämmöffnungen 10 in zwei Reihen mit einem Durchmesser von 45 mm auf. Der Abstand a₃ zur Innenseite 1 ist dabei deutlich größer als der Abstand a₁ zur Außenseite 2. Also sind die Dämmöffnungen 10 in der Wärmedurchgangsrichtung 9 in der Nähe der Außenseite 2 angeordnet, wobei die Reihe mit zehn Dämmöffnungen 10 näher an der Außenseite 2 orientiert ist als die Reihe mit neun Dämmöffnungen 10. Gemäß dieser Anordnung weist der Mauerstein siebzehn Knoten 12 auf.

Die Anordnung der Dämmöffnungen 10 in dem Mauerstein gemäß Figur 2 ist ähnlich der in dem Mauerstein gemäß Figur 1, wobei eine dritte Reihe von acht Dämmöffnungen 10 auf der der Innenseite 1 zugewandten Seite der Reihe mit den neun Dämmöffnungen 10 ergänzt ist, sodass insgesamt siebenundzwanzig Dämmöffnungen 10 vorliegen. Durch die dritte Reihe Dämmöffnungen 10 werden weitere fünfzehn Knoten 12 geschaffen, sodass dieser Mauerstein insgesamt zweiunddreißig Knoten 12 umfasst.

Die Reihen von Dämmöffnungen 10 sind insgesamt bei der Ausführungsform gemäß Fig. 1 und 2 so in der zur Außenseite 2 des Mauersteins hin gelegenen Seite des Mauersteins positioniert, dass die Reihen von Dämmöffnungen 10 in einer Dickenzone Zₐ angeordnet ist, die sich zur Außenseite 2 jenseits der Längsmittelebene LM des Mauersteins erstreckt. Damit ist der Stein aufgrund der durch Öffnungen ungestörten inneren Lage Zᵢ statisch besonders tragfähig, erfüllt allerdings durch die Dämmeinsätze 11 hohe Anforderungen an die Dämmfähigkeit.

Für die in den Figuren 1 und 2 dargestellten Ausführungsformen beträgt Rastermittenabstand a_{R} innerhalb einer Reihe 58 mm, wobei der Reihenabstand d_{R} mit 5 mm festgelegt ist. Daraus folgt der Rastermittenabstand a_{R} für benachbarte Dämmöffnungen 10 zwischen zwei benachbarten Reihen von 57,8 mm, so dass im Wesentlichen ein einheitlicher Rastermittenabstand a_{R} zwischen zwei benachbarten Dämmöffnungen 10 innerhalb einer Reihe und über zwei Reihen hinweg geschaffen ist.

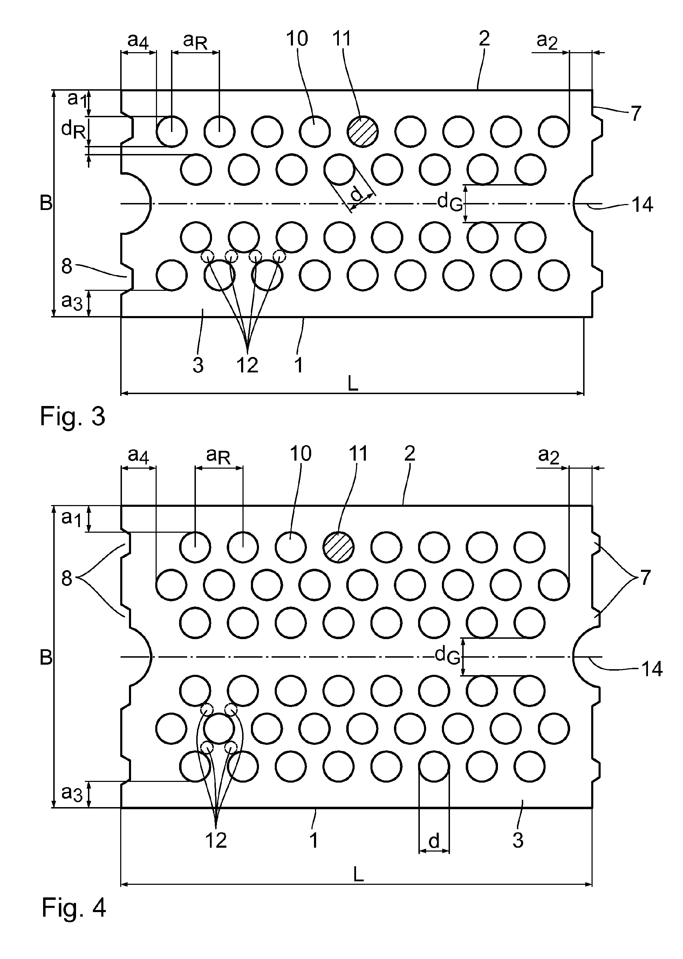

Der Mauerstein gemäß Fig. 3 weist insgesamt vierunddreißig Dämmöffnungen 10 mit einem Durchmesser von 40 mm auf, die paarweise in zwei identischen Reihengruppen angeordnet sind. Jeweils eine Reihe mit neun Dämmöffnungen ist von der Innenseite 1 bzw. der Außenseite 2 des Mauersteins mit einem Abstand a₁ bzw. a₃ von 35 mm angeordnet. Die Reihen mit acht Dämmöffnungen sind zum Mauersteininneren, einander gegenüberliegend orientiert. Der Abstand zwischen den Reihengruppen d_{G} beträgt 50 mm. Insgesamt resultiert eine zu einer Symmetrieebene vierzehn symmetrische Anordnung der Dämmöffnungen 10 auf der Deckfläche 3.

Der Rastermittenabstand a_{R} innerhalb einer Reihe beträgt 63,4 mm, wobei der Reihenabstand d_{R} mit 10 mm festgelegt ist. Daraus folgt der Rastermittenabstand a_{R} für benachbarte Dämmöffnungen 10 zwischen zwei benachbarten Reihen von 59,2 mm. Der Mauerstein gemäß Fig. 3 weist insgesamt zweiunddreißig Knoten 12 auf.

Die Anordnung der Dämmöffnungen 10 in dem Mauerstein gemäß Figur 4 ist ähnlich der in dem Mauerstein gemäß Figur 3, wobei sich eine dritte Reihe von acht Dämmöffnungen 10 an die Reihe mit den neun Dämmöffnungen 10 anschließt, so dass fünfundzwanzig Dämmöffnungen 10 je Reihengruppe und insgesamt fünfzig Dämmöffnungen 10 vorliegen. Durch die dritte Reihe der Dämmöffnungen 10 werden weitere zweiunddreißig Knoten 12 geschaffen, so dass dieser Mauerstein insgesamt vierundsechzig Knoten 12 umfasst.

Weiterhin weist der Mauerstein gemäß Fig. 4 zwei zusätzliche, identisch ausgebildete Stegvorsprünge 7 sowie dazu korrespondierende Ausnehmungen 8 auf.

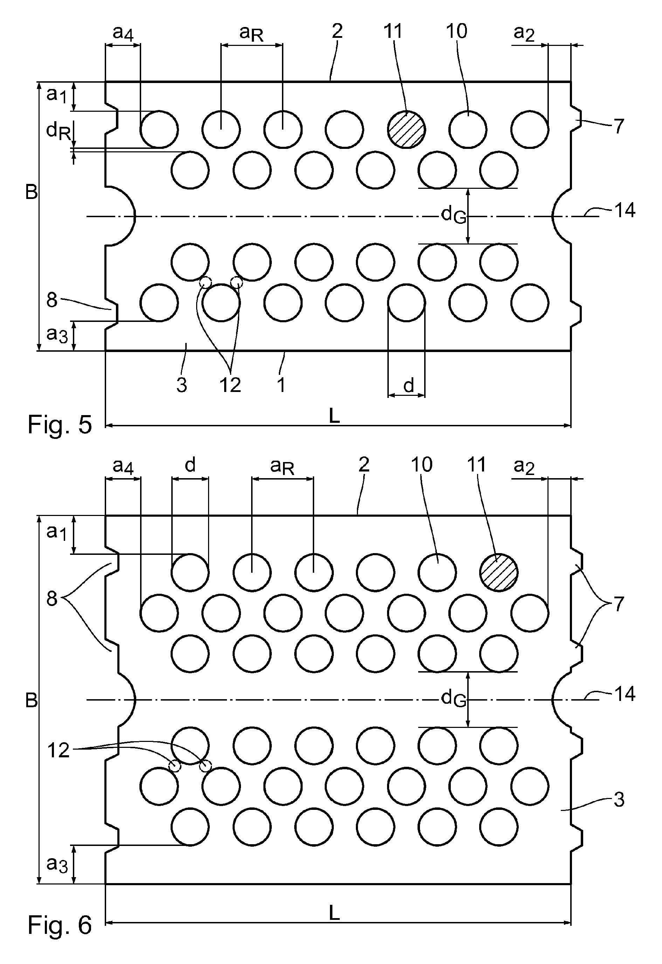

Die Anordnung der Dämmöffnungen 10 in dem Mauerstein gemäß Figur 5 ist ebenfalls ähnlich der in dem Mauerstein gemäß Figur 3, wobei insgesamt sechsundzwanzig Dämmöffnungen 10 mit einem Durchmesser von 50 mm vorgesehen sind. Die zwei äußeren Reihen weisen jeweils sieben Dämmöffnungen 10 und zwei inneren Reihen, die mit einem Abstand zwischen den Reihengruppen d_{G} von 75 mm angeordnet sind, weisen jeweils sechs Dämmöffnungen 10 auf.

Der Rastermittenabstand a_{R} innerhalb einer Reihe beträgt 82,8 mm, wobei der Reihenabstand d_{R} mit 5 mm festgelegt ist. Daraus folgt der Rastermittenabstand a_{R} für benachbarte Dämmöffnungen 10 zwischen zwei benachbarten Reihen von 68,9 mm. Der Mauerstein gemäß Fig. 4 weist insgesamt vierundzwanzig Knoten 12 auf.

Die Anordnung der Dämmöffnungen 10 in dem Mauerstein gemäß Figur 6 ist ähnlich der in dem Mauerstein gemäß Figur 5, wobei sich eine dritte Reihe von sechs Dämmöffnungen 10 an die Reihe mit den sieben Dämmöffnungen 10 anschließt, so dass neunzehn Dämmöffnungen 10 je Reihengruppe und insgesamt achtunddreißig Dämmöffnungen 10 vorliegen. Durch die dritte Reihe der Dämmöffnungen 10 werden weitere vierundzwanzig Knoten 12 geschaffen, so dass dieser Mauerstein insgesamt achtundvierzig Knoten 12 umfasst.

Weiterhin weist der Mauerstein gemäß Fig. 6 analog zu dem gemäß Fig. 4 zwei zusätzliche Stegvorsprünge 7 sowie dazu korrespondierende Ausnehmungen 8 auf.

Die folgende Dimensionstabelle gibt die konkreten Maße der gezeigten Mauersteine gemäß Figuren 1 bis 6 an.
Dimensionstabelle

| | **Fig. 1** | **Fig. 2** | **Fig. 3** | **Fig. 4** | **Fig. 5** | **Fig. 6** |
|---|---|---|---|---|---|---|
| L in mm | 624 | 624 | 624 | 624 | 624 | 624 |
| B in mm | 300 | 365 | 300 | 400 | 365 | 500 |
| d in mm | 45 | 45 | 40 | 40 | 50 | 50 |
| a₁ in mm | 30 | 30 | 35 | 35 | 40 | 52,5 |
| a₂ in mm | 21 | 21 | 30 | 30 | 30 | 30 |
| a₃ in mm | 175 | 190 | 35 | 35 | 40 | 52,5 |
| a₄ in mm | 36 | 36 | 47 | 47 | 47 | 47 |
| F in mm² | 1831 | 2236 | 1831 | 2452 | 2236 | 3075 |
| D in mm² | 302 | 429 | 427 | 628 | 510 | 746 |

Aufgrund der erfindungsgemäßen Verwendung der Dämmeinsätze 11 in den Dämmöffnungen 10 wird die Wärmeleitfähigkeit λ, die für einen klassischen Porenbeton-Mauerstein 0,09 W/mK beträgt, auf 0,079 W/mK für den Mauerstein gemäß Figur 1 und auf 0,076 W/mK für den Mauerstein gemäß Figur 2 reduziert wird. Dies folgt vor allem aus der Erhöhung der Summen-Dämmfläche von 302 mm² im ersten Ausführungsbeispiel auf 429 mm² im zweiten Ausführungsbeispiel, sodass die Dämmwirkung zusätzlich verbessert wird. Damit wird nicht nur eine verbesserte Wärmedämmung gegenüber dem bekannten Porenbeton-Mauerstein sondern auch gegenüber einem Porenbeton-Mauerstein vom Typ YTONG, der eine Wärmeleitfähigkeit von 0,08 W/mK aufweist. Zwar ist die Verbesserung der Wärmedämmung gegenüber dem YTONG-Mauerstein nur gering, jedoch ist der erfindungsgemäße Mauerstein aufgrund seiner erhöhten mechanischen Belastbarkeit zusätzlich überlegen.

## Patentansprüche

1. Mauerstein aus Porenbeton umfassend
- mehrere quer zu einer Wärmedurchgangsrichtung (9) verlaufende Reihen vertikaler Dämmöffnungen (10) und
- jeweils in die Dämmöffnungen (10) eingesetzte Dämmeinsätze (11) aus einem Wärmedämmmaterial,
wobei die Dämmöffnungen (10) benachbarter Reihen versetzt zueinander angeordnet sind,
**dadurch gekennzeichnet, dass**
die Dämmöffnungen (10) und die jeweils darin befindlichen Dämmeinsätze (11) zylindrisch geformt sind.

2. Mauerstein nach Anspruch 1, **dadurch gekennzeichnet, dass** die Dämmöffnungen (10) einen Durchmesser (d) von 30 mm bis 60 mm, insbesondere von 35 mm bis 55 mm, aufweisen.

3. Mauerstein nach einem der vorgenannten Ansprüche, **dadurch gekennzeichnet, dass** die Dämmöffnungen (10) in einem gleichmäßigen Rastermittenabstand (a_{R}) in einer Reihe angeordnet sind.

4. Mauerstein nach Anspruch 3, **gekennzeichnet durch** einen Rastermittenabstand (a_{R}) von 50 mm bis 85 mm.

5. Mauerstein nach einem der vorgenannten Ansprüche, **dadurch gekennzeichnet, dass** ein Reihenabstand (d_{R}) der Dämmöffnungen (10) zwischen zwei benachbarten Reihen 3 mm bis 15 mm beträgt.

6. Mauerstein nach einem der Ansprüche 3 bis 5, **gekennzeichnet durch** den Reihenabstand (d_{R}) derart, dass alle benachbarten Dämmöffnungen (10) im gleichmäßigen Rastermittenabstand (a_{R}) angeordnet sind.

7. Mauerstein nach einem der vorgenannten Ansprüche, **gekennzeichnet durch** eine bezüglich einer Symmetrieebene (14) des Mauersteins symmetrische Anordnung der Dämmöffnungen (10).

8. Mauerstein nach einem der Ansprüche 1 bis 7, **dadurch gekennzeichnet, dass** mehrere Reihen von Dämmöffnungen (10) in der zur Außenseite (2) des Mauersteins hin gelegenen Seite des Mauersteins mit einem Abstand (a₃) zur Innenseite (1) angeordnet sind, der deutlich größer als der Abstand (a₁) zur Außenseite ist.

9. Mauerstein nach Anspruch 8, **dadurch gekennzeichnet, dass** die mehreren Reihen von Dämmöffnungen (10) in einer Dickenzone (Zₐ) angeordnet ist, die sich zur Außenseite (2) jenseits der Längsmittelebene (LM) des Mauersteins erstreckt.

10. Mauerstein nach einem der vorgenannten Ansprüche, **dadurch gekennzeichnet, dass** die Dämmöffnungen (10) Durchgangsbohrungen sind.

11. Mauerstein nach einem der vorgenannten Ansprüche, **dadurch gekennzeichnet, dass** das Wärmedämmmaterial ein Mineralfasermaterial, insbesondere Steinwolle ist.
